# EUROPEAN PATENT APPLICATION

(11) **EP 4 147 850 A1**
(43) Date of publication of application: **15.03.2023**
(21) Application number: 21382826.2
(22) Date of filing: 14.09.2021
(51) Int. Cl.: B29C 64/106, B29C 64/209, B29C 64/314, B29C 64/112, B33Y 10/00, B33Y 30/00, B33Y 40/00, D01D 5/00

(54) **ADDITIVE MANUFACTURING SYSTEM**

(71) Applicant: CIC nanoGUNE - Asociación Centro de Investigación Cooperativa en Nanociencias, 20018 San Sebastian, Guipuzcoa (ES)
(72) Inventor: LATASA MARTÍNEZ DE IRUJO, Javier, E-20018 San Sebastian, Guipuzcoa (ES)
(74) Representative: ABG Intellectual Property Law, S.L.

(57) **Abstract**

Dispensing device (10) comprising a main body (11) and an electrical nozzle (17) for additive manufacturing of materials, more particularly of composite structures, a manufacturing system (20) for the production of composite structures comprising the dispensing device (10) and a method of manufacturing those.

## Description

### TECHNICAL FIELD OF THE INVENTION

The present invention belongs to the field of additive manufacturing, particularly to the field of dispensing heads for additive manufacturing of materials, more particularly of composite structures, and is related to a dispensing device for such manufacturing.

The present invention is also related to a manufacturing system for the production of composite structures and a method of manufacturing those.

### BACKGROUND OF THE INVENTION

Currently, dispensing heads are available in the state of the art, which allow the use of different materials and techniques of manufacturing, and combinations thereof.

Such known dispensing heads allow the mentioned combinations either by changing the head in order to change the manufacturing technique or by having multiple dispensers on the same carriage, which are interchanged, generally in a manual manner, in order to use different materials during the manufacturing process of a structure.

The use of different materials for the manufacturing of a structure, and the need of manufacturing by means of different techniques at a time has the drawback of exchanging the dispensing head or material needed every time that the process requires; that is, having different dispensing heads prepared with the right material being each head of the specific technique needed. This implies excessive time and effort, and when done manually, the action of a workman. Additionally, if the different heads are stored in a single carriage, the exchange of heads is limited to the heads that are available in the carriage, thus being the number of heads limited. This increases the weight and limits the travel path as the number of materials used increases.

Moreover, the dispensing head changing approach mentioned requires the calibration of the position of said dispensing head to maintain the reference between different layers and materials each time the material or manufacturing technique is changed.

### SUMMARY OF THE INVENTION

The present invention provides a solution for all the aforementioned problems, by a dispensing device for additive manufacturing according to claim 1, a manufacturing system according to claim 4 and a manufacturing method according to claim 14. In dependent claims, preferred embodiments of the invention are defined.

In a first inventive aspect, the invention provides a dispensing device for additive manufacturing, wherein the dispensing device comprises a main body and an electrical nozzle.

The main body comprises:
∘ a housing defining an inner volume configured to receive a storage device introduced into the dispensing device through a first port arranged in the main body, the storage device comprising dispensing means for providing a material confined within the storage device, and
∘ a second port configured for establishing a fluidic communication between the inner volume of the housing and the outside of the dispensing device.

The housing comprises positioning means configured to accommodate and guide the storage device within the housing in an operative position such that the dispensing means of the storage device are surrounded by and in fluid communication with the electrical nozzle in order to allow exiting the material confined within the storage device.

The second port is configured to releasably engage the electrical nozzle.

Throughout the entire description, a 'storage device' should be understood as a container or reservoir configured for housing a material in a liquid or solid phase, the material being suitable for being provided in a fluid phase as a flow or stream of material during a manufacturing process according to an additive manufacturing technique. The storage device comprises dispensing means for providing the material confined within the storage device. In particular embodiments, said storage devices are provided in the form of cartridges or syringes.

In an embodiment the storage device has an elongated body which defines a longitudinal direction and the dispensing means are arranged at an end of the body in the longitudinal direction, preferably protruding from said body in the longitudinal direction. In an embodiment at least a portion of the storage device has a substantially cylindrical shape. In an embodiment, the storage device has a tapered portion which connects the substantially cylindrical portion and the dispensing means.

Throughout the entire description, Additive Manufacturing techniques, also referred to as 3D printing, shall be understood as manufacturing methods and technologies wherein three-dimensional components are built up applying successive layers of material under computer control, departing from a digital model of the structure to be produced.

Typically, the material (either meltable material or matrix material in the case of reinforced materials) confined within the storage device, in case of being in a solid phase changes to a liquid upon the application of heat and solidifies (or hardens) to a solid when cooled.

Additionally, before printing, the digital CAD sketch of the structure which is intended to be manufactured is digitally sliced into multiple horizontal sections or layers. A controller then uses this generated slicing model to manufacture the structure sequentially, for instance with one layer at a time (i.e. layer-by-layer), with each layer adhering or bonding to the previous one.

According to the present invention, during use, the storage device is introduced through a first port arranged in the main body and the storage device is received within the housing of the main body. The positioning means guide the storage device to an operative position. In said operative position the storage device allows the output of material, through the dispensing means provided on the storage device, to an electrical nozzle engaged with the second port of the main body, for the subsequent supply of material, and the ultimate manufacture of a structure.

The storage device may be prepared to 'print' following a particular additive manufacturing technique, generating a structure with the properties provided by said technique. This may be achieved by providing the storage devices with different materials. Accordingly, different storage devices housing different materials may be used with the dispensing device of the invention and combined along with the application of different additive manufacturing techniques, thus resulting in a versatile dispensing device which allows manufacturing a wide range of hybrid composite structures with the desired properties.

In this sense, many technologies are encompassed within Additive Manufacturing technologies, depending on the form of the material and machine technology used.

The electrical nozzle is releaseably engaged to the second port of the main body of the dispensing device. Thus, a first electrical nozzle can be disengaged from the second port in order to engage a second electrical nozzle.

In an operative mode, only one storage device is loaded in the dispensing device and only one electrical nozzle is engaged with the second port to provide material which allows the manufacturing of a structure. However, any or both of the storage device and the electrical nozzle can be exchanged during the manufacturing process to apply different materials and/or different manufacturing conditions.

According to the operative mode, in order to supply the material according to any Additive Manufacturing technique, the storage device loaded in the dispensing device is positioned and oriented with respect to the electrical nozzle engaged with the second port such that the dispensing means of the storage device are surrounded by and in fluid communication with the electrical nozzle in order to allow exiting the material confined within the storage device.

The positioning means of the dispensing device allow the correct position and orientation of the dispensing means with respect to the electrical nozzle, so that, during the operative mode of the device, the production is accurate.

In a preferred embodiment the dispensing device is intended to be used with a storage device having an elongated body which defines a longitudinal direction and wherein the dispensing means protrude from said body in the longitudinal direction. In an embodiment at least a portion of the storage device has a substantially cylindrical shape. In an embodiment, the storage device has a tapered portion which connects the substantially cylindrical portion and the dispensing means.

In an embodiment, the positioning means are configured to guide the storage device to an operative position wherein the dispensing means are arranged axially coincident with the second port as well as with the electrical nozzle engaged with the second port

In a more particular preferred embodiment, in addition to being axially coincident, the electrical nozzle and the dispensing means of the storage device loaded in the dispensing device are coincident with respect to the coordinate of a Z-axis, that is, with respect to a main direction of the device that corresponds to the direction of material supply from the inside of the operating (i.e., loaded) storage device to the outside of the same for the deposition of layers of material.

The right positioning of the storage device guaranties that the dispensing means, preferably a tip of the dispensing means through which dispensing of the material confined within the storage device is performed, is always in the same position with respect to the dispensing device. Since the dispensing device never loses positional reference during the same manufacturing job, the positional reference of all the storage devices for all materials and techniques throughout the entire manufacturing job is maintained. As a consequence, the positional reference of all the deposited materials and with all the techniques is maintained in all the deposited layers for the complete manufactured product.

Advantageously, the mentioned positioning means allow an automatic repositioning and correction of the position and orientation of the used storage device, without the need of calibration of the dispensing device.

In a particular embodiment, the positioning means comprises two conical supports that self-center the storage device and its corresponding dispensing means with respect to the second port and the electrical nozzle. The storage device rests both at an upper part and at a lower part thereof on two cone-shaped surfaces that, when the storage device is placed in position pushed against said cone-shaped surfaces, centre and secure the storage device, placing it always in the same position with respect to the electrical nozzle.

In a particular embodiment, the dispensing device comprises fixing means configured for securing the storage device when loaded in the dispensing device in the operative mode. Advantageously, the fixing means avoid undesired extraction of the storage device from the housing of the main body, while allowing its movement in the two linear directions of the advance of the production.

In an embodiment, the dispensing device comprises temperature control means configured to control the temperature of the storage device arranged in the dispensing device.

With respect to the Additive Manufacturing techniques that can be carried out by the dispensing device of the invention, according to a particular embodiment, the dispensing device is configured to execute any of the following processes:
- fused deposition modeling,
- solution electrospinning,
- melt electrospinning,
- melt electrowriting, or
- bioprinting.

With respect to the different Additive Manufacturing techniques listed above, Fused Deposition Modeling (FDM) is a manufacturing process which involves the use of materials in the form of filaments injected through at least one nozzle onto a build sheet. The nozzle(s) trace(s) the surface pattern for each particular layer with the material hardening prior to the deposition of the next layer. The process repeats until the piece is completed, i.e. is printed.

Solution electrospinning is a fiber production method which uses electric force to draw charged threads of polymer solutions up to fiber diameters in the order of some hundred nanometers without requiring the use of coagulation chemistry or high temperatures to produce solid threads from solution, what makes this technique appropriate for the production of fibers using large and complex molecules.

Melt electrospinning, unlike solution electrospinning, wherein polymer solutions are used as the base material for the processing of a structure, makes use of polymer melts, which are more viscous and need cooling to solidify. Additionally, melt electrospinning does not make use of volatile solvents which are evaporated during the manufacturing process, which prevents generation of solvent toxicity and accumulation. Melt electrospinning allows to produce micron diameter fibers.

Melt electrowriting refers to a technique wherein an electric field is used for the controlled deposition of a molten polymer jet with a predictable path, which is continuously deposited onto a bed, rapidly solidifying into micrometric fibers which can be consistently laid on top of each other, resulting in the ability to direct-write complex and multi-scaled architectures and structures.

Finally, bioprinting refers to the utilization of Additive Manufacturing techniques to combine cells, growth factors, and/or biomaterials to fabricate biomedical parts with the aim of producing structures with natural tissue-like characteristics. Generally, bioprinting is performed by means of a layer-by-layer method to deposit materials known as bioinks to produce said tissue-like structures that can be used in various medical and tissue engineering fields.

In an embodiment, the dispensing device comprises actuating means configured to apply a force upon a storage device, when the storage device is arranged within the housing, which causes the material confined within to flow out of the storage device through the dispensing means.

In an embodiment, the actuating means comprise a piston configured for being driven axially in order to apply a pressure onto the storage device.

According to this embodiment, the dispensing means of the storage device loaded in the dispensing device provide material by means of extrusion under the pressure exerted by the actuating means.

Advantageously, the use of a piston applying a pressure onto the storage device allows acting upon the material confined within the storage device in order to force its output through the dispensing means preventing the material from coming into contact with gases, such as oxygen, with which it can react, modifying its structure and therefore deteriorating or undesirably changing its properties, unlike other systems like screw extrusion where the material chamber (i.e., storage device) is kept open and exposed to ambient air.

Additionally, it provides the technical effect of allowing a precise control both in the extrusion and in the retraction of the manufacturing material outwardly and inwardly, respectively, with respect to the storage means, what advantageously translates in optimum operating properties when carrying out a manufacturing process according to the Fused Deposition Modeling or Bioprinting techniques.

In an embodiment, the actuating means comprise a hydraulic or pneumatic pressure control mechanism configured to exert and control a hydrostatic pressure on the material confined within the storage device, wherein the control mechanism comprises a conduit configured to establish a fluidic communication with said storage device through a regulator valve located in said storage device.

In an embodiment, the actuating means comprise both:
a piston configured for being driven axially in order to apply a pressure onto the storage device, and
a hydraulic or pneumatic pressure control mechanism configured to exert and control a hydrostatic pressure on the material confined within the storage device, wherein the control mechanism comprises a conduit configured to establish a fluidic communication with said storage device through a regulator valve located in said storage device.

According to this embodiment, the dispensing device is able to operate both by piston actuated extrusion and by hydrostatic pressure extrusion, thus providing greater versatility. However, in other embodiments the actuating means may be configured to actuate only by piston actuated extrusion or by hydrostatic pressure extrusion.

In a second inventive aspect, the invention defines a manufacturing system comprising:
- a dispensing device according to any of the embodiments of the first inventive aspect,
- a bed,
- a controller configured to control the dispensing device, and
- voltage provision means connectable to the electrical nozzle.

The present manufacturing system comprises a controller which is preferably adapted to control several functions of the different elements of the dispensing device according to the first inventive aspect.

The process of loading, extracting and/or interchanging a storage device into/from the dispensing device in order to arrange one particular storage device in the operative position, can be manual or automatic. In this regard, in a particular embodiment, an operator manually takes the corresponding storage device from a storage area and manually loads and secures it on the dispensing device.

In an embodiment, the manufacturing system comprises exchange means configured to insert a storage device into the housing and to extract the storage device from the housing. The load, extraction and/or interchange of storage devices is thus automatically performed in a more efficient way. Advantageously, a change between the Additive Manufacturing techniques under which the dispensing device operates can be carried out automatically based on the interchanging of the different storage devices that can be loaded in the dispensing device, everything while maintaining all the rest of the operating conditions of the dispensing device. Thus, multiphase composite structures can be manufactured in one go while maintaining the positional predetermined reference with precision between the different layers and deposited materials during the production.

Advantageously, a change of technique can be carried out automatically for any of the different storage devices within the same dispensing device.

In an embodiment, the exchange means are arranged in the dispensing device.

In an embodiment, the exchange means comprise a robotic arm.

In an embodiment, the manufacturing system comprises a storage area configured to house a plurality of storage devices.

In an embodiment, the storage area comprises a rigid element on which the different storage devices can be mounted and secured.

In an embodiment, the storage area comprises a wheel, roulette or moving chain that rotates to facilitate the robotic arm access to each location of the storage devices.

In an embodiment, the manufacturing system comprises a plurality of storage devices located in the storage area.

In a particular embodiment, the storage means can be cartridges in its totality, syringes or a combination of both. Additionally, the stored materials can be different materials, required for the production.

Each of the storage devices is configured to house and provide, by means of the corresponding dispensing means, material with which the required section, layer or group of layers of a product to be manufactured. Such material leaves the dispensing means of the storage device, and the electrical nozzle of the dispensing device and is then deposited or provided to a predetermined space of the mentioned product, forming a specific type of structure made of a specific material. As previously described, such material used for the mentioned manufacturing of a product is provided by the dispensing means to the electrical nozzles for its later deposition according to a predetermined Additive Manufacturing technique, which defines the flow of the required material through the corresponding electrical nozzle.

As described previously, regardless of the manufacturing technique executed by the manufacturing system, during the manufacturing, the dispensing device performs several operations in order to achieve the required product. Such production is performed by means of material layers which are stacked in order to achieve a final product.

Each of the subsequent layers is provided by means of a corresponding storage device comprising a predetermined desired material, the storage device being arranged in the dispensing device in an operative position.

In an embodiment, the manufacturing system comprises a storage support configured to house a plurality of electrical nozzles. In an embodiment, the storage support comprises a rigid element on which the different electrical nozzles can be mounted and secured. In an embodiment, the manufacturing system comprises a plurality of electrical nozzles located in the storage support.

The process of interchanging the electrical nozzles, in order to arrange one particular electrical nozzle in an operative mode, can be manual or automatic.

In a particular embodiment, an operator manually takes the corresponding electrical nozzle from a storage support and manually engages it with the second port of the main body of the dispensing device.

In an embodiment, the manufacturing system comprises shifting means configured to engage and disengage the electrical nozzle from the port.

Advantageously, the process of interchanging the electrical nozzle by means of shifting means allows the automatic engagement, disengagement and storage of the electrical nozzles.

In a particular embodiment, the shifting means comprise a robotic arm.

In an embodiment, the manufacturing system comprises exchange means and shifting means implemented as a single element, such as a robotic arm controllable to insert the storage device into the housing of the dispensing device and to extract the storage device from said housing and also controllable to engage and disengage the electrical nozzle with/from the second port of the dispensing device. In other embodiments, the exchange means and the shifting means may be implemented as separate elements, each configured to pick and place only storage devices and only electrical nozzles, respectively.

In a particular embodiment, the system comprises an image capturing means configured to detect the position of the dispensing means of the storage device when the storage device is loaded in the housing of the dispensing device, the image capturing means being further configured to provide the controller with information regarding the detected position.

In an embodiment, the controller is configured to:
- receive the detected position of the dispensing means,
- correlate the detected position with a predetermined position, the predetermined position corresponding to an ideal position of the dispensing means with respect to the electrical nozzle engaged to the port,
- determine if a deviation of the detected position from the predetermined position occurs, in which case a positioning error is identified, and
- determine a correction required to compensate the positioning error.

In this embodiment, the manufacturing system is provided with automatic inspection and correction capabilities. In this case, once the storage device is loaded and secured in the dispensing device, an image capturing means, such as a camera, detects the position of the dispensing means of the storage device after said loading and securing process has been performed. Preferably, the position of the tip of the dispensing means is detected. The image capturing means provides the controller with information about said position of the dispensing means detected after a storage device has been loaded and secured within the dispensing device.

According to this embodiment, the controller is provided with an artificial vision software which correlates the information received from the image capturing means with a predetermined position stored in the software corresponding to an ideal position of the dispensing means of the storage device once it has been installed within the dispensing device. If a deviation of the detected position from the predetermined position is detected, the existence of a positioning error is identified. The controller calculates the positioning error of the actual dispensing means within the dispensing device with respect to the ideal position. This software provides the controller with the error detected in the X, Y and Z coordinates. The controller then applies the corresponding correction to the detected error to the movements to be made by the dispensing device for each particular storage device. This inspection, calculation and correction procedure is preferably repeated with each new storage device inserted and secured in the dispensing device.

In an embodiment, the controller is configured to, after the loading of a storage device in the dispensing device, move the dispensing device to a detection area within the field of view of the image capturing means.

In an embodiment, the manufacturing system comprises temperature control means configured to control the temperature of the storage devices arranged either in the storage area, in the dispensing device or in both. More than one temperature control means may be arranged in the manufacturing system, such as a first temperature control means arranged in the dispensing device to control the temperature of a storage device housed therein and a second temperature control means arranged in the storage area to control the temperature of storage devices stored therein.

In a particular embodiment, the storage area is configured to maintain the temperature of the storage devices controlled at the temperature required for each material comprised within each storage device, by means of the temperature control means.

Advantageously, such temperature control means allow the control of the temperature, that is, heating or cooling, of
- the stored material confined within a storage device loaded in the dispensing device and ready to be used, in order to provide it with the adequate conditions for its deposition during the manufacturing of the product; and/or
- the stored material confined within a storage device located in the storage area which is intended to be used in a successive step of the manufacturing process, said storage device being thus kept ready at adequate conditions for the exact moment when it is needed.

In an embodiment, the voltage provision means are also configured to control the voltage in the electrical nozzles.

Advantageously, the voltage control means allows to control the force with which the fibers are generated in the solution electrospinning, melt electrospinning and melt electrowriting techniques. This electrostatic force caused by the electric field directly influences the diameter and other properties of the generated fibers and, consequently, the characteristics of the deposited fibrous structure. Therefore, by controlling the voltage in the electrical nozzles, multiple properties of the generated fibrous structures are controlled.

Such voltage generates an electrical field, which directly acts on the deposition of material produced by the electrical nozzle during the manufacturing.

In a particular embodiment, the electrical field is generated when applying high voltage in the present system, and the distribution of the electrical field is different according to the electrical nozzle.

In a particular embodiment, at least one electrical nozzle comprises multiple poles, which allows controlling jet deviation of the dosed material by applying electrostatic jet deflection whilst the production is performed.

In an embodiment, the manufacturing system comprises deflection means located at the at least one electrical nozzle, the deflection means being configured to deflect the material exiting the electrical nozzle.

Advantageously, the deflection means allow a controlled deposition of the material dosed by the electrical nozzle during an operation mode of the system.

In an embodiment, the controller is configured to control one or several of the following elements:
- storage devices,
- exchange means,
- shifting means,
- temperature control means,
- voltage provision means,
- image capturing means
- actuating means.

In an embodiment wherein the manufacturing system comprises a storage area and exchange means, the controller is configured to control the exchange means, such as a robotic arm, to remove the current storage device from the dispensing device and to leave said storage device in an available position in the storage area. If the manufacturing process is to be continued, the controller is further configured to control the exchange means to take another storage device from the storage area, to carry it, and loading it in the dispensing device.

In a third inventive aspect, the invention provides a method of manufacturing of a composite material by means of a system according to any of the embodiments of the second inventive aspect, the method comprising the following steps:
a) introducing a storage device comprising a predetermined material in the housing of the dispensing device, and accommodating the storage device within the housing in an operative position such that the dispensing means of the storage device are surrounded by and in fluid communication with the electrical nozzle in order to allow exiting the material confined within the storage device,
b) controlling the temperature of the storage device,
c) applying a layer of material on a plane located on the bed or on a previous layer of material, following a predetermined path controlled by the controller, and
d) applying a subsequent layer of material, wherein:
   - if the material of the subsequent layer is the same of the previous layer, repeating step c), and
   - if the material of the subsequent layer is different from the material of the previous layer, extracting the storage device from the housing and repeating the steps from step a) for a different storage device.

Advantageously, the present method allows manufacturing a product made of different materials and/or applying different techniques, by means of the use of several storage devices containing different materials and by means of the selection of the adequate nozzle, correspondingly.

The change of material is thus simplified to the change of the storage device, whereas the change of technique is automatically done by the software in the controller following a previously prepared program. Such a change of storage device maintains the precision of the position required for the nozzle without further external actions.

In an embodiment, the method comprises the step of disengaging the electrical nozzle from the second port and engaging a different electrical nozzle.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a front view of an embodiment of a dispensing device according to the invention, intersected by a vertical plane
- Figure 2: This figure shows a perspective view of an embodiment of a manufacturing system according to the invention, intersected by a vertical middle-plane.
- Figure 3: This figure shows a schematic representation of a manufacturing system according to the invention.

### DETAILED DESCRIPTION OF THE INVENTION

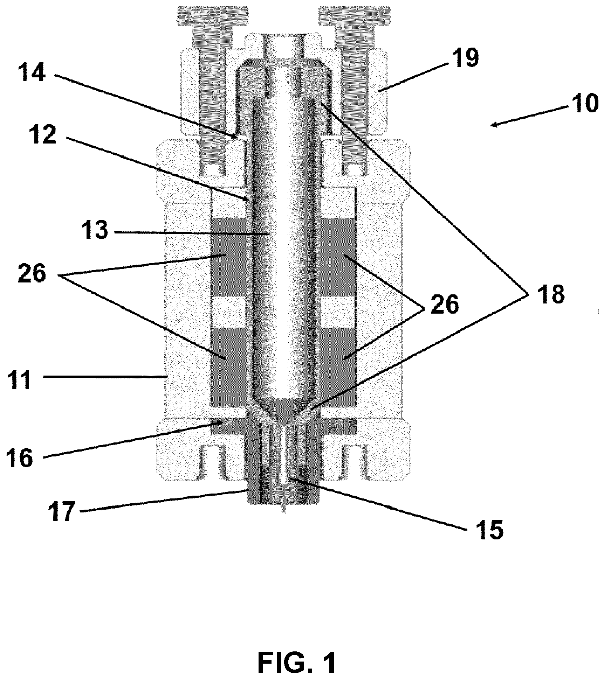

Figure 1 shows a shows a front view of an embodiment of a dispensing device (10) for additive manufacturing. In particular, the dispensing device (10) of Figure 1 is intersected by a vertical plane, offering details of the way in which the elements are arranged inside the dispensing device (10).

As it can be seen, the dispensing device (10) comprises a main body (11) which in turn comprises a housing (12) wherein a storage device (13) is loaded. In particular, said housing (12) defines an inner volume configured to receive the storage device (13) which is introduced into the dispensing device (10) through a first port (14) arranged in the main body (11).

With respect to the storage device (13), it is provided with a material confined inside, more in particular a material in a liquid or solid phase, the material being suitable for being provided in a fluid phase as a flow or stream of material during a manufacturing process according to an additive manufacturing technique. The storage device (13) comprises dispensing means (15) for providing the material confined within the storage device (13).

It can be seen that, in the particular embodiment, the storage device (13) is provided in the form of a syringe. In particular, the storage device (13) is shaped with an elongated body with a cylindrical shape which defines a longitudinal direction, and the dispensing means (15) are arranged at the end of a tapered portion provided at the bottom of the storage device (13), that is, at the lower part of the storage device (13) as seen in Figure 1, according to the longitudinal direction.

As it can be seen, the dispensing device (10) shown in Figure 1 comprises a second port (16) provided at the lowest portion of the main body (11). Said port is configured for establishing a fluidic communication between the inner volume of the housing (12) and the outside of the dispensing device (10), for providing a fluidic path for the material confined within the storage device (13), to be supplied to the outside of the housing by the dispensing means (15).

Additionally, the second port (16) is configured to releasably engage the electrical nozzle (17) shown in Figure 1 for the ultimate supply of material.

The dispensing device (10) shown further comprises positioning means (18) provided within the housing (12), said positioning means (18) being configured to accommodate and guide the storage device (13) within the housing (12) in an operative position. During use, the storage device (13) is introduced through the first port (14) arranged in the main body (11) and the storage device (13) is received within the housing (12) of the main body (11). The positioning means (18) guide the storage device (13) to said operative position, wherein the dispensing means (15) of the storage device (13) are surrounded by and in fluid communication with the electrical nozzle (17) in order to allow exiting the material confined within the storage device (13).

In particular, in said operative position the storage device (13) allows the output of material, through the dispensing means (15) provided on the storage device (13), to the electrical nozzle (17) engaged with the second port (16) of the main body (11).

More in particular, the positioning means (18) of the embodiment shown in Figure 1 comprises a conical support that self-center the storage device (13) and its corresponding dispensing means (15) with respect to the second port (16) and the electrical nozzle (17). The storage device (13) is shown with its lower part resting against the cone-shaped surface such that, when the storage device (13) is placed in position pushed against said cone-shaped surface, the cone-shaped surface centres and secures the storage device (13), placing it always in the same position with respect to the electrical nozzle (17).

Additionally, it can be seen that in this embodiment the positioning means (18) are accommodating the storage device (13) in an operative position wherein:
- the dispensing means (15) are arranged axially coincident with the second port (16) as well as with the electrical nozzle (17) engaged with the second port (16); and
- the electrical nozzle (17) and the dispensing means (15) of the storage device (13) are coincident with respect to the coordinate of a Z-axis, that is, with respect to the longitudinal direction of the cylindrical body of the storage device (13).

It can also be seen that the dispensing device (10) of Figure 1 comprises actuating means (19) configured to apply a force upon the storage device (13) which causes the material confined within to flow out of the storage device (13) throughout the dispensing means (15). According to the embodiment shown in Figure 1, the dispensing means (15) of the storage device (13) provide material by means of extrusion under the pressure exerted by the actuating means (19).

Finally, the dispensing device (11) shown in this embodiment comprises temperature control means (26) configured to control the temperature of the storage device (13) arranged in the housing (12) of the dispensing device (10), which allows to control the temperature, that is, heating or cooling, of the stored material confined within the storage device (13) loaded in the dispensing device (10) and ready to be used, in order to provide it with the adequate conditions for its deposition during the manufacturing of a product by means of an Additive Manufacturing technique.

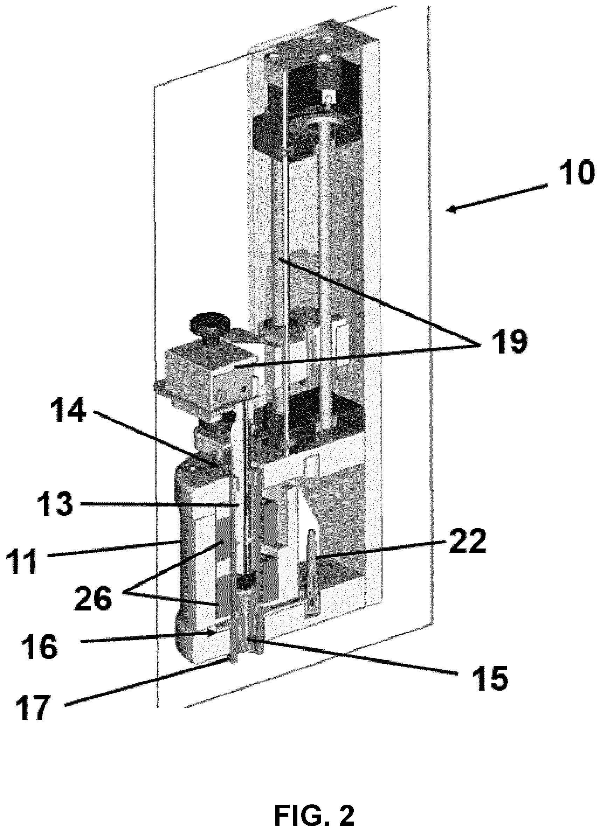

Figure 2 shows a perspective view of the embodiment of the dispensing device (10) of Figure 1, intersected by a vertical middle-plane, plane, offering details of the way in which the elements are arranged inside the dispensing device (10).

The perspective shown in Figure 2 of the depicted embodiment allows to see additional details with respect to the perspective shown in Figure 1. In particular, it can be seen how mechanical and electrical/pneumatic elements responsible for executing and guiding the motion of the actuating means (19) are arranged in the rear and upper part of the dispensing device (10), as it is seen in Figure 2.

In particular, the actuating means (19) comprise a piston configured for being driven axially in order to apply a pressure onto the storage device (13). Said piston is mounted on a pneumatic/electrical cylindrical actuator by means of a mechanical connection, which provides an up/down stroke along said cylinder to control the actuation of the actuating means (19) upon the storage device (13).

Advantageously, the use of a piston applying a pressure onto the storage device (13) allows acting upon the material confined within the storage device (13) in order to force its output through the dispensing means (15) preventing the material from coming into contact with gases, such as oxygen, with which it can react, modifying its structure and therefore deteriorating or undesirably changing its properties.

Additionally, the actuating means (19) shown comprise a system configured to control the maximum range of up/down stroke the piston may travel for exerting a predetermined force upon the storage device (13), in order to prevent the piston from derailing ∘ from jamming/pushing with excessive force against the storage device (13). In particular, the actuating means (19) comprise at least one endstop switch which may be embodied as a mechanical, magnetic, or optical switch.

Finally, the embodiment of the invention, as seen in Figure 2, is provided with voltage provision means (22) connected to the electrical nozzle (17). In particular, those voltage provision means (22) are arranged in the main body (11) of the dispensing device (10) in the form of a vertically protruding needle, and are configured to feed the electrical nozzle (17) engaged with the second port (16) of the main body (11), to control and modulate the electric field generated, and thus alter the way in which the flow of material is provided based on the different Additive Manufacturing techniques according to which the dispensing device (10) can operate. The electrostatic force caused by the electric field directly influences the properties of the material supplied and, consequently, the characteristics of the deposited structure. Therefore, by controlling the voltage in the electrical nozzles (17), multiple properties of the generated structures are controlled.

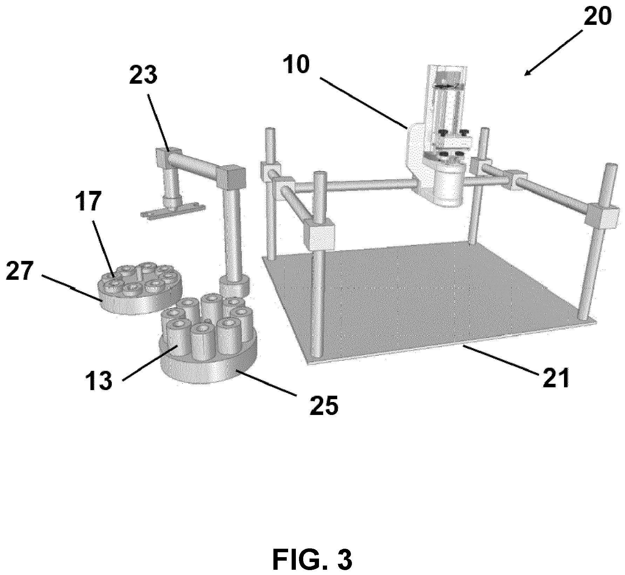

Figure 3 shows a schematic representation of a manufacturing system (20) according to the invention. In particular, the manufacturing system (20) of Figure 3 comprises a dispensing device (10) according to an embodiment of the present invention, wherein the dispensing device (10) is implemented as part of a Cartesian multi-axis robotic mechanism. Such configuration of a manufacturing system (20) embodied as a Cartesian 3D printer for providing the dispensing device (10) with movement along 3 perpendicular axis to carry out the deposition of material during the Additive Manufacturing process is shown for exemplary purposes. However, different types of mechanism can be implemented in the manufacturing system (20) in order to provide the dispensing device (10) with mobility over the bed (21) and over the structure which is intended to be manufactured. Technologies such as Selective Compliance Assembly Robotic Arm (SCARA) systems or 3D-Printing parallel manipulators, among others can be used.

The manufacturing system (20) further comprises voltage provision means (not shown) feeding the electrical nozzle (17) of the dispensing device (10) and a controller (not shown) configured to control the dispensing device (10) such that an Additive Manufacturing process is carried out according to which a flow of material is deposited onto the bed (21) shown in Figure 3 for the ultimate manufacture of a desired structure.

The manufacturing system (20) of Figure 3 comprises a storage area (25) configured to house a plurality of storage devices (13) and a storage support (27) configured to house a plurality of electrical nozzles (17). In particular, it can be seen that a plurality of storage devices (13) and electrical nozzles (17) are already located in a respective storage area (25) and storage support (27), both of them being implemented as two circulardrum-type racks on which the different storage devices (13) and electrical nozzles (17) are mounted and secured.
In the particular embodiment shown in Figure 3, all of the storage means (13) shown located in the storage area (25) comprise different type of materials suitable for different Additive Manufacturing techniques confined within.

In relation to the presence of a plurality of storage devices (13) and electrical nozzles (17) in the storage area (25) and the storage support (27), respectively, the manufacturing system (20) further comprising exchange means and shifting means embodied as a single element, more in particular, a robotic arm (23), configured to insert a storage device (13) into the housing (12) of the dispensing device (10) and to extract a storage device (13) from the housing (12), and to engage/disengage an electrical nozzle (17) with the second port (16) of the main body (11).

In particular, said robotic arm, according to which the process of loading, extracting and/or interchanging the storage devices (13) and/or electrical nozzles (17) is thus automatically performed in a more efficient way, allowing to change between the Additive Manufacturing techniques under which the dispensing device (10) operates automatically, based on the interchanging of the different storage devices (13) and/or electrical nozzles (17) that can be loaded in the dispensing device (10), everything while maintaining all the rest of the operating conditions of the dispensing device (10).

The robotic arm (23) is therefore controlled by the controller of the manufacturing system (20) to remove a current storage device (13) from the dispensing device (10) and to leave said storage device (13) in an available position in the storage area (25), and/or to remove a current electrical nozzle (17) from the dispensing device (10) and to leave said electrical nozzle (17) in an available position in the storage support (27). If the manufacturing process is to be continued, the controller is further configured to control the exchange means (25), that is, the robotic arm (23), to take another storage device (13) from the storage area (25) and/or electrical nozzle (17) from the storage support (27), to carry it, and loading it in the dispensing device (10).

Finally, the manufacturing system (20) of Figure 3 comprises temperature control means (not shown) configured to control the temperature of the storage devices (13) arranged in the storage area (25) and in the housing (12) of the dispensing device (10).

According to this embodiment, such temperature control means allow the precise control of the temperature, that is, heating or cooling, of
- the stored material confined within a storage device (13) loaded in the dispensing device (10) and ready to be used, in order to provide it with the adequate conditions for its deposition during the manufacturing of the product; and/or
- the stored material confined within the storage devices (13) located in the storage area (25) which is intended to be used in a successive step of the manufacturing process, said storage devices (13) being thus kept ready at adequate conditions for the exact moment when they are needed.

All the elements implemented in the manufacturing system (20) of Figure 3 are controlled by the controller of the manufacturing system (20); in particular, the robotic arm (23), the temperature control means, the voltage provision means, the movement of the dispensing device (10), and the actuating means (19) of the dispensing device (10).

## Claims

1. Dispensing device (10) for additive manufacturing comprising:
- a main body (11) comprising:
∘ a housing (12) defining an inner volume configured to receive a storage device (13) introduced into the dispensing device (10) through a first port (14) arranged in the main body (11), the storage device (13) comprising dispensing means (15) for providing a material confined within the storage device (13), and
∘ a second port (16) configured for establishing a fluidic communication between the inner volume of the housing (12) and the outside of the dispensing device (10),
- an electrical nozzle (17),
wherein the second port (16) is configured to releasably engage the electrical nozzle (17), and
wherein the housing (12) comprises positioning means (18) configured to accommodate and guide the storage device (13) within the housing (12) in an operative position such that the dispensing means (15) of the storage device (13) are surrounded by and in fluid communication with the electrical nozzle (17) in order to allow exiting the material confined within the storage device (13).

2. Dispensing device (10) according to the preceding claim, further comprising actuating means (19) configured to apply a force upon the storage device (13) arranged within the housing (12) which causes the material confined within to flow out of the storage device (13) throughout the dispensing means (15).

3. Dispensing device (10) according to claim 2, wherein the actuating means (19) comprise
a piston configured for being driven axially in order to apply a pressure onto the storage device (13), and/or
a hydraulic or pneumatic pressure control mechanism configured to exert and control a hydrostatic pressure on the material confined within the storage device (13), wherein the control mechanism comprises a conduit configured to establish a fluidic communication with said storage device (13) through a regulator valve located in said storage device (13).

4. Manufacturing system (20) comprising:
- a dispensing device (10) according to any of the preceding claims,
- a bed (21),
- a controller configured to control the dispensing device (10), and
- voltage provision means (22) connectable to the electrical nozzle (17).

5. Manufacturing system (20) according to claim 4, further comprising exchange means (23) configured to insert the storage device (13) into the housing (12) and to extract the storage device (13) from the housing (12).

6. Manufacturing system (20) according to any of claims 4 to 5, further comprising shifting means (24) configured to engage and disengage the electrical nozzle (17) from the second port (16).

7. Manufacturing system (20) according to any of claims 5 or 6, wherein the exchange means (23) and/or the shifting means (24) comprise a robotic arm.

8. Manufacturing system (20) according to any of claims 4 to 7, further comprising a storage area (25) configured to house a plurality of storage devices (13).

9. Manufacturing system (20) according to any of claims 4 to 8, further comprising temperature control means (26) configured to control the temperature of the storage devices (13) arranged either in the storage area (25), in the housing (12) of the dispensing device (10) or in both.

10. Manufacturing system (20) according to any of claims 4 to 9, further comprising an image capturing means configured to detect the position of the dispensing means (15) of the storage device (13) when the storage device (13) is loaded in the housing (12) of the dispensing device (10), the image capturing means being further configured to provide the controller with information regarding the detected position.

11. Manufacturing system (20) according to the previous claim, wherein the controller is configured to:
- receive the detected position of the dispensing means (15),
- correlate the detected position with a predetermined position, the predetermined position corresponding to an ideal position of the dispensing means (15) with respect to the electrical nozzle (17) engaged with the second port (16),
- determine if a deviation of the detected position from the predetermined position occurs, in which case a positioning error is identified, and
- determine a correction required to compensate the positioning error.

12. Manufacturing system (20) according to any of claims 4 to 11, further comprising deflection means located at the electrical nozzle (17), the deflection means being configured to deflect the material exiting the electrical nozzle (17).

13. Manufacturing system (20) according to any of claims 4 to 12, wherein the controller is configured to control one or several of the following elements:
- storage devices (13),
- exchange means (23),
- shifting means (24),
- temperature control means (26),
- voltage provision means (22),
- image capturing means, and/or
- actuating means (19).

14. Method of manufacturing of a composite material by means of a system (20) according to any of claims 4 to 13, the method comprising the following steps:
a) introducing a storage device (13) comprising a predetermined material in the housing (12) of the dispensing device (10), and accommodating the storage device (13) within the housing (12) in an operative position such that the dispensing means (15) of the storage device (13) are surrounded by and in fluid communication with the electrical nozzle (17) in order to allow exiting the material confined within the storage device (13),
b) controlling the temperature of the storage device (13),
c) applying a layer of material on a plane located on the bed (21) or on a previous layer of material, following a predetermined path controlled by the controller, and
d) applying a subsequent layer of material, wherein:
• if the material of the subsequent layer is the same of the previous layer, repeating step c), and
• if the material of the subsequent layer is different from the material of the previous layer, extracting the storage device (13) from the housing (12) and repeating the steps from step a) for a different storage device (13).

15. Method of manufacturing according to the previous claim, further comprising the step of disengaging the electrical nozzle (17) from the second port (16) and engaging a different electrical nozzle (17).
